# EUROPÄISCHE PATENTSCHRIFT

(11) **EP 2 258 622 B1**
(45) Veröffentlichungstag und Bekanntmachung des Hinweises auf die Patenterteilung: **12.12.2012**
(21) Anmeldenummer: 10005301.6
(22) Anmeldetag: 20.05.2010
(51) Int. Cl.: B65B 51/04, A22C 11/12

(54) **Vorrichtung zum Setzen U-förmiger Clips**
Device for setting U-shaped clips
Dispositif d'installation de clips en forme de U

(30) Priorität: 04.06.2009 DE 202009007886 U
(43) Veröffentlichungstag der Anmeldung: 08.12.2010
(73) Patentinhaber: Tipper Tie technopack GmbH, 21509 Glinde (DE)
(72) Erfinder: Kruse, Holger, 22145 Hamburg (DE); Bogun, Thomas, 23879 Mölln/Lauenburg (DE)
(74) Vertreter: Glawe, Delfs, Moll

(56) Entgegenhaltungen:
- EP-A1- 1 736 412
- DE-A1- 1 461 873
- DE-A1- 2 344 226
- DE-A1- 2 710 210
- US-A- 3 017 638

## Beschreibung

Die Erfindung betrifft eine Vorrichtung nach dem Oberbegriff des Patentanspruchs 1. Solche Vorrichtungen kommen in Verpackungsmaschinen zum Verschließen schlauchförmiger (einschließlich beutelförmiger) Verpackungen zum Einsatz, beispielsweise bei Clipmaschinen für die Wurstherstellung.

U-förmige Clips in diesem Sinne haben mindestens zwei Clipschenkel, die über einen Cliprücken miteinander verbunden und von diesem im Wesentlichen gleichsinnig abgewinkelt sind. Im Regelfall sind solche Clips metallisch. Ein Clip wird in der Weise um einen gerafften Verpackungsschlauch gesetzt, dass seine Clipschenkel den Schlauch umgreifen und dann aufeinander zu um den Schlauch herum gebogen werden. Hierbei drückt bei gattungsgemäßen Vorrichtungen ein Verschließwerkzeug die Beine zusammen, während ein anderes Verschließwerkzeug von der gegenüberliegenden Seite auf den Cliprücken drückt. Aus wie vielen Elementen sich die Verschließwerkzeuge jeweils zusammensetzen, ist dabei unerheblich. Die Verschließwerkzeuge befinden sich normalerweise an den Enden von Verschließarmen, die fortlaufend zusammen und auseinander bewegt werden.

Zur Erzielung hoher Produktionsgeschwindigkeiten werden die Clips zu Magazinen zusammengefasst, und zwar im Regelfall zu einer Reihe aufgereiht. Gattungsgemäße Vorrichtungen lösen den jeweils vordersten Clip aus dem Magazinverband heraus, um mit ihm den Verpackungsschlauch zu verschließen. Nach der Art ihrer Magazinierung lassen sich zwei Cliptypen unterscheiden, die jeweils unterschiedliche Typen von Vorrichtungen zum Setzen der Clips bedingen.

Beim ersten Cliptyp sind die Clips über Verbindungsstege miteinander verbunden, wobei die Stege typischerweise an den Schenkelenden ansetzen (z. B. DE 195 27 876 A1). Die auf diese Weise zu einem biegsamen Clipstrang zusammengefassten Clips können dann auf einer Führungsbahn entlang eines Verschließarms dem Verschließwerkzeug in dessen Verschließposition zugeführt werden (DE 10 2005 029 227 B4). Durch eine in dessen unmittelbarer Nähe angeordnete Schneidkante wird der jeweils vorderste Clip vom Strang beim Verschließvorgang abgetrennt, um gleich anschließend um den Schlauch herumgebogen zu werden (DE-AS 1 078 495). Mit dem eigentlichen Verschließvorgang geht also stets ein Abtrennvorgang einher, der Lärm und Verschleiß verursacht.

Die Erfindung befasst sich mit dem zweiten Cliptyp, nämlich vereinzelten Clips. Diese Clips hängen nicht über Stege miteinander zusammen. Die Herauslösung aus einem Magazinverbund geschieht nicht an der Verschließposition. Folglich bedarf es besonderer Maßnahmen, um einen solchen vereinzelten Clip dorthin zu befördern. Typischerweise geschieht dies mit Hilfe von Clipkanälen, in denen sie eines der Verschließwerkzeuge vom Magazinende zur Verschlussposition vortreibt (z. B. DE 23 44 226 A1). Für spezielle Clips ist es auch bekannt, den Clip von einem der Verschließwerkzeuge zur Verschlussposition transportieren zu lassen
(DE 23 00 980 A1, DE 27 10 210 A1). Hierbei dürfen der Clip bei und nach dem Biegen und auch die Matrize nicht breiter sein als unverformte Clip, was für die Festigkeit und Dichtheit des Verschlusses Nachteile bringt. Es ist auch bekannt, den Clip in einer relativ zu beiden Verschließwerkzeugen bewegten Transporteinheit zur Verschließposition zu bringen (DE-OS 1 461 873, DE 203 03 858 U1).

Bei Vorrichtungen mit Clipkanal treibt das Verschließwerkzeug den Clip naturgemäß entlang einer linearen Transportbahn durch den Kanal. Entsprechend diesem Vorbild werden vorbekannte Transporteinheiten und die ihnen folgenden Verschließwerkzeuge linear bewegt.

Der Erfindung liegt die Aufgabe zugrunde, höhere Geschwindigkeiten solcher Vorrichtungen zu ermöglichen. Sie löst dies durch die Merkmale des Patentanspruchs 1. Die Unteransprüche betreffen vorteilhafte Weiterbildungen der Erfindung.

Die Erfindung beruht zum einen auf der Erkenntnis, dass die Linearbewegungen von Verschließwerkzeugen und Transporteinheit ungünstig für die Erreichung hoher Geschwindigkeiten sind. Linearantriebe, z. B. Pneumatikzylinder, sind für wiederkehrende Bewegungsabläufe relativ träge. Für die Ableitung einer Linearbewegung aus einer Radialbewegung, z. B. einer Kurbelwelle, sind hohen Geschwindigkeiten durch die Trägheit des Antriebsgestänges Grenzen gesetzt. Zum anderen fußt die Erfindung auf der Einsicht, dass bei Verwendung einer Transporteinheit die Zufuhrbewegung für den Clip, anders als beim Clipkanal, nicht unbedingt linear sein muss. Insbesondere eröffnet eine nicht lineare Bewegung der Transporteinheit die Möglichkeit, dass sich auch die Verschließwerkzeuge und somit sämtliche an der Verschließbewegung beteiligten Teile nicht linear, insbesondere bogenförmig, noch besser kreisbogenförmig, bewegen. Sämtliche Antriebsbewegungen können dann von einer einzigen Antriebswelle abgeleitet werden. Hierbei können die Massen der erforderlichen Getriebekomponenten relativ gering gehalten werden, so dass höhere Taktraten möglich sind.

Vereinzelte Clips im Sinne der Erfindung liegen dann vor, wenn sie entweder von vornherein nicht magaziniert sind oder wenn das Herauslösen aus einem Magazinverbund in einem Abstand zur Verschlussposition erfolgt, so dass der vorderste Clip zu dieser transportiert werden muss, ohne dass er noch in irgendeiner Weise mit anderen Clips in Verbindung steht.

Relativ zu beiden Verschließwerkzeugen beweglich ist die Transporteinheit dann, wenn ihre Position verändert werden kann, ohne dass sich zugleich die Position wenigstens eines der beiden Verschließwerkzeuge in gleicher Weise ändert.

Vorteilhafterweise ist die Transportbahn bogenförmig, vorzugsweise kreisbogenförmig. Dadurch sind besonders massearme und damit schnell zu beschleunigende Antriebe möglich. Aus demselben Grund ist es vorteilhaft, die Verschließbahnen der Verschließwerkzeuge nicht linear, vorzugsweise bogenförmig, weiter vorzugsweise kreisbogenförmig auszubilden. Ebenfalls aus demselben Grund ist es vorteilhaft, wenn das erste Verschließwerkzeug an einem ersten Verschließarm, das zweite Verschließwerkzeug an einem zweiten Verschließarm angeordnet und beide Verschließarme um dieselbe Schwenkachse schwenkbar gelagert sind. Sie können dann in einer Radialbewegung aufeinander zu geführt werden, was bei Vorrichtungen, die mir herkömmlichen U-Clips arbeiten, bislang nicht möglich war.

Zudem ist es vorteilhaft, wenn die Transporteinheit an einem Transportarm angeordnet ist und dieser Transportarm um dieselbe Schwenkachse wie die Verschließarme schwenkbar gelagert ist. Die gemeinsame Schwenkachse vereinfacht die Konstruktion weiter. Insbesondere kann der Transportarm drehfest an einem auf der Schwenkachse liegenden Schwenkzapfen angeordnet sein, an dem die Verschließarme gelagert sind.

Die Vorteile der Erfindung zeigen sich in besonderer Weise dann, wenn die Bewegungen für die Verschließwerkzeuge und ggf. auch die Transporteinheit von demselben Antriebsstrang abgeleitet werden, beispielsweise von einer gemeinsamen Antriebswelle, so dass nur ein einziger Motor für die Bewegungen beider Verschließwerkzeuge und ggf. auch der Transporteinheit erforderlich ist.

Vorteilhafterweise weist die Transporteinheit eine Ausnehmung zur Aufnahme des Verpackungsschlauchs auf. Dies ermöglicht es, den vereinzelten Clip besonders dicht an den Verpackungsschlauch heranzubringen, bevor er von den Verschließwerkzeugen zusammen gebogen wird.

Es ist ferner vorteilhaft, wenn die Transporteinheit eine Führungsbahn für das zweite Verschließwerkzeug aufweist. Besonders vorteilhaft ist es hierbei, wenn die Führungsbahn einen bogenförmigen, vorzugsweise kreisbogenförmigen, Verlauf hat. Diese Maßnahmen verbessern die Stabilität der Bewegung des zweiten Verschließwerkzeugs. Vorzugsweise ist die Führungsbahn zugleich zur Führung des Clips geeignet, etwa indem sie Führungsnuten für die Clipschenkel aufweist. Dieselben Führungsnuten können auch zur Führung des Verschließwerkzeugs dienen. Dazu sollte es an einem Ansatz angeordnet sein, der die gleichen äußeren, zu den Nuten kongruenten Abmessungen wie ein Clip oder geringfügig kleinere Abmessungen hat.

Vorteilhafterweise umfasst die Führungsbahn einen geöffneten Abschnitt zum Durchtritt eines Clips. Hierdurch kann der Clip auf einfache Weise der Transporteinheit zugeführt werden.

Weiter ist es vorteilhaft, wenn die Führungsbahn einen umschlossenen Abschnitt, der zum Halten des Clips ausgebildet ist, aufweist. Dieser umschlossene Abschnitt sollte so bemessen sein, dass der Clip darin zwar parallel zur Erstreckungsrichtung seiner Schenkel verschoben werden kann, dabei aber sicher geführt wird. Besonders vorteilhaft ist es, wenn der umschlossene Abschnitt so ausgeführt ist, dass der Clip darin ohne Einwirkung äußerer Kräfte positionsstabil relativ zur Transporteinheit gehalten wird. Damit bildet dieser Abschnitt eine Cliptasche, in die und aus der der Clip durch das zweite Verschließwerkzeug geschoben werden kann. Der sichere Halt kann zum Beispiel durch Klemmkräfte erreicht werden, die vorteilhafterweise auf die Clipschenkel ausgeübt werden, etwa indem Führungsnuten für die Schenkel so bemessen sind, dass eine leichte Klemmwirkung entsteht.

Es ist überdies vorteilhaft, wenn die erfindungsgemäße Vorrichtung ein Blockierelement zum Blockieren der Zuführposition in der Phase zwischen dem Zeitpunkt, zu dem das zweite Verschließwerkzeug diese Position während seiner Bewegung auf die Verschlussposition zu, und dem Zeitpunkt, zu dem das zweite Verschließwerkzeug diese Position in entgegen gesetzter Richtung passiert, aufweist. Dieses Blockierelement kann in einfacher Weise von einem Ansatz am gebildet werden, an dessen einem Ende das zweite Verschließwerkzeug angeordnet ist, und der von diesem Ende weg eine solche Ausdehnung aufweist, dass er den dem von der Zuführposition abgenommenen Clip folgenden Clip an einer weiteren Bewegung hindert. Der Ansatz kann dabei auch vorteilhafterweise so ausgebildet sein, dass sein Querschnitt dem der Führungsbahn entspricht. Er wird dann selbst in der Führungsbahn geführt und blockiert diese zugleich.

Schließlich ist es vorteilhaft, wenn die Führungsbahn die Ausnehmung zur Aufnahme des Verpackungsschlauchs kreuzt, vorzugsweise in einem Winkel zwischen 80° und 100°, weiter vorzugsweise 90°. Bei dieser Ausgestaltung kann das zweite Verschließwerkzeug den Clip in der Führungsbahn, während er noch sicher in der Transporteinheit gehalten wird, dicht an den Verpackungsschlauch heranbewegen. Insbesondere ist es besonders gut möglich, den Clip zunächst so weit vor zu bewegen, dass er mit dem Verpackungsschlauch in Berührung kommt, bevor er auf das erste Verschließwerkzeug trifft oder bevor er von den Verschließwerkzeugen zusammen gebogen wird. Damit kann der Verpackungsschlauch vor Beginn des Biegevorgangs etwas vorgespannt werden, was die Festigkeit des Verschlusses erhöht.

Demgemäß bezieht sich die Erfindung auch auf ein Verfahren zum Verschließen eines schlauchförmigen Verpackungsschlauchs mit einem vereinzelten U-förmigen Clip, bei dem der Clip zunächst von einem zweiten Verschließwerkzeug mit den Clipschenkeln voran an den Verpackungsschlauch herangeführt wird, um dort anschließend von einem auf die Schenkel auftreffenden ersten Verschließwerkzeug und dem zweiten Verschließwerkzeug, welches auf den Cliprücken einwirkt, um den Schlauch herum gebogen zu werden, **dadurch gekennzeichnet, dass** der Biegevorgang erst beginnt, nachdem der Clip mit dem Schlauch in Berührung gekommen ist. Vorteilhafterweise spannt der Clip den Schlauch etwas vor. Daneben ist es vorteilhaft, wenn die beiden Verschließwerkzeuge bogenförmige, vorzugsweise kreisbogenförmige Verschließbewegungen ausführen.

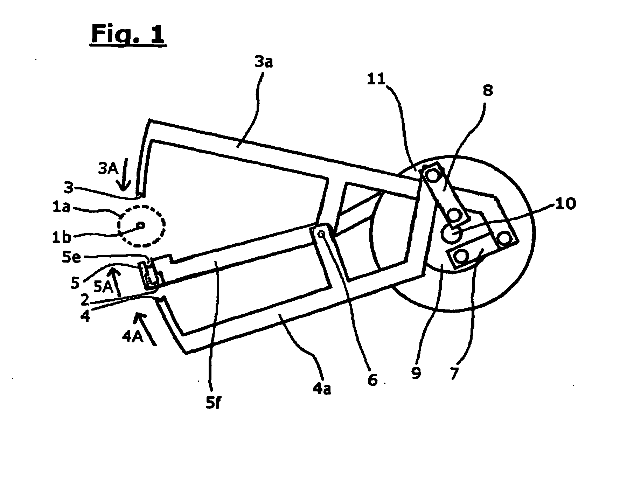

Im Folgenden wird ein Ausführungsbeispiel der Erfindung anhand von Zeichnungen näher erläutert. Dabei zeigen
- Fig. 1: eine schematische Seitenansicht einer erfindungsge- mäßen Vorrichtung;
- Fig. 2: eine perspektivische Detailansicht des Bereichs der Transporteinzeit aus Fig. 1.

Ein gefüllter Verpackungsschlauch 1a (gestrichelt eingezeichnet), beispielsweise ein mit Wurstbrät gefüllter Wurstdarm, ist durch nicht dargestellte Raffelemente auf einen kleinen Schlauchzopf 1b zusammengerafft worden. Mit einem Clip 2 soll ein Verschluss des Zopfs 1b dadurch gebildet werden, dass ein erstes Verschließwerkzeug 3 die voreilenden Clipschenkel um den Zopf 1b herum biegt, während ein zweites Verschließwerkzeug 4 aus der Gegenrichtung auf den Cliprücken drückt. Die Verschließbahnen der Verschließwerkzeuge sind kreisbogenförmig, wie durch die Pfei-1e 3A und 4A angedeutet.

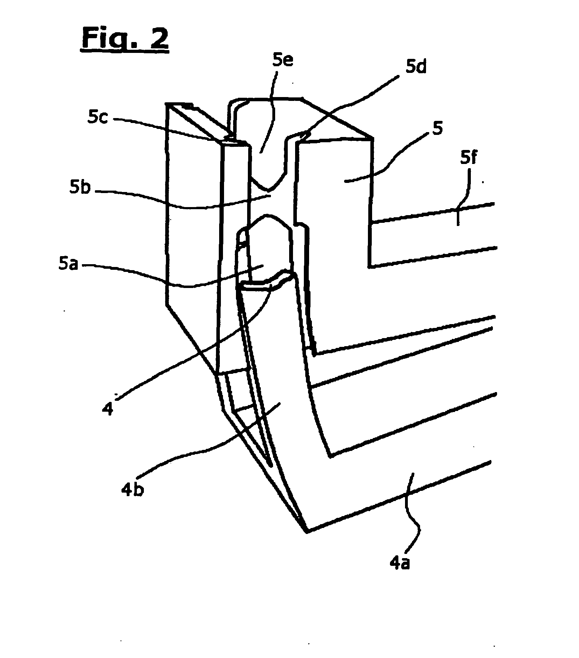

Hierzu muss der Clip 2 zunächst von einer Zuführposition, in der er sich in Fig. 2 befindet, hin zur Verschlussposition bei 1b befördert werden. Bei der Zuführposition kann es sich insbesondere um den vordersten Clip in einem aus der Zeichenebene hinausragenden Clipmagazin handeln. Diese Beförderung geschieht mit Hilfe einer Transporteinheit 5. Die Transporteinheit 5 weist eine Führungsbahn für den Clip 2 auf, innerhalb derer das zweite Verschließwerkzeug 4 den Clip 2 verschieben kann. Ein erster Abschnitt der Führungsbahn bildet ein in der Zeichenebene offenes Clipfenster 5a. Ein in Bewegungsrichtung 4A des zweiten Verschließwerkzeugs 4 sich anschließender zweiter Abschnitt der Führungsbahn bildet eine Cliptasche 5b, in der der Clip 2 positionsstabil gehalten werden kann. Dies kann insbesondere über eine Klemmkraft geschehen, die durch geeignete Bemessung von Nuten 5c, 5d, in denen die Clipschenkel positionsstabil geführt werden können, erzielt werden kann.

Das zweite Verschließwerkzeug 4 trifft bei seiner Bewegung zunächst auf den Rücken des im Clipfenster 5a befindlichen Clips 2 und treibt diesen dann voran in die Cliptasche 5b, während die Transporteinheit noch in Ruhe bleibt oder sich langsamer als das zweite Verschließwerkzeug 4 in ihrer Bewegungsrichtung 5A bewegt. Im Anschluss daran sind die Bewegungen von Transporteinheit 5 und zweitem Verschließwerkzeug 4 so aufeinander abgestimmt, dass die erstere dem letzterem vorauseilt. Bei der Ankunft an der Verschlussposition bei 1b nimmt eine in die Transporteinheit eingelassene Ausnehmung 5e zunächst den gerafften Schlauch 1b auf. Zugleich wird dieser von den Schenkeln des in der Tasche befindlichen Clips 2 umgriffen.

In dieser Phase holt das zweite Verschließwerkzeug 4 die Transporteinheit 5 wieder ein, so dass der Clip 2 in der Cliptasche 5b weiter vorgetrieben wird. Die Bewegung des zweiten Verschließwerkzeugs 4 ist gegenüber der des ersten Verschließwerkzeugs 3 so abgestimmt, dass die Enden der Schenkel des Clips 2 zu einem Zeitpunkt auf das zweite Verschließwerkzeug 3 treffen, zu dem der Clip 2 noch eine sichere Führung durch die Nuten 5c und 5d erfährt. Bei weiterem Vortrieb des Clips 2 in der Führungsbahn der Transporteinheit 5 wird die sichere Führung dann vom ersten Verschließwerkzeug 3 übernommen, was insbesondere durch stirnseitige, nicht eingezeichnete Führungsnuten für die Clipschenkel erreicht oder unterstützt werden kann. Bei weiterer Annäherung der Verschließwerkzeuge 3, 4 wird der dazwischen befindliche Clip schließlich zusammen gebogen, so dass er den Schlauch 1b verschließt.

Anschließend kehren die Verschließwerkzeuge 3, 4 sowie die Transporteinheit 5 entgegen der Pfeile 3A, 4A und 5A in ihre Ausgangspositionen zurück, so dass ein neuer Clip 2 in das Clipfenster 5a aufgenommen und mit ihm ein neuer Verschließvorgang beginnen kann.

Das erste Verschließwerkzeug 3 ist am Ende eines ersten Verschließarms 3a und das zweite Verschließwerkzeug 4 am Ende eines zweiten Verschließarms 4a angeordnet. Beide Verschließarme 3a, 4a sind um eine Schwenkachse 6 schwenkbar gelagert. Jeweils am werkzeugfernen Ende sind der erste Verschließarm 3a mit einer ersten Koppelstange 7 und der zweite Verschließarm 4a mit einer zweiten Koppelstange 8 gelenkig verbunden. An ihren jeweils anderen Enden sind die Koppelstangen 7, 8 mit einer Antriebsscheibe 9 gelenkig verbunden. Die Antriebsscheibe 9 sitzt auf einer Antriebswelle 10, die von einem nicht dargestellten Motor angetrieben wird. Auf diese Weise werden die Verschließwerkzeuge 3, 4 in periodische Schwenkbewegungen auf die Verschlussposition bei 1b zu und von ihr weg versetzt.

Aus Platzgründen sind die Verschließarme 3a, 4a im Ausführungsbeispiel derart ausgeführt, dass ihre geradlinigen Grundkörper von der Schwenkachse 6 beabstandet und über abgewinkelte Ansätze mit den Verschließwerkzeugen 3 bzw. 4, der Schwenkachse 6 und den Koppelstangen 7 bzw. 8 verbunden sind.

Die Transporteinheit 5 ist am Ende eines Transportarms 5f angeordnet. Dieser ist ebenfalls um die Schwenkachse 6 schwenkbar gelagert. An seinem der Transporteinheit 5 abgewandten Ende ist der Transportarm 5f abgewinkelt und wirkt mit einer Kurvenscheibe 11, die auf der Antriebswelle 10 sitzt, in der Weise zusammen, dass die Schwenkbewegung der Transporteinheit 5 gegenüber der des zweiten Verschließwerkzeugs 4 zunächst verzögert, dann beschleunigt und dann wieder verzögert ausgeführt wird, so dass das zweite Verschließwerkzeug 4 den Clip 2 zunächst in die Cliptasche 5b schiebt, dann die Transporteinheit 5 mit dem Clip 2 vorauseilt, um dann an der Verschlussposition bei 1b wieder vom zweiten Verschließwerkzeug 4 eingeholt zu werden. Der dafür erforderliche Abtaster am Transportarm 5f und die Nutführung der Steuerkurve befinden sich auf der von der Blickrichtung abgewandten Seite der Kurvenscheibe 11 (nicht eingezeichnet).

Die entlang Clipfenster 5a und Cliptasche 5b verlaufende Führungsbahn in der Transporteinheit 5 hat in der Zeichenebene einen kreisbogenförmigen Verlauf. Dazu kongruent ist der Ansatz 4b mit dem zweiten Verschließwerkzeug 4 am zweiten Verschließarm 4a kreisbogenförmig ausgeführt, so dass er zwischen den Nuten 5c, 5d sicher geführt werden kann. Außerdem blockiert er während der gesamten Bewegung des zweiten Verschließwerkzeugs die Zuführposition in der Weise, dass weitere Clips erst dann nachrücken können, wenn sich die Transporteinheit wieder aufnahmebereit an dieser Position befindet. An ihrem der Verschlussposition 1b zugewandten Ende kreuzt die Führungsbahn im rechten Winkel die Ausnehmung 5e für den Verpackungsschlauch 1b. Auf diese Weise kann der Clip 2 den Verpackungsschlauch 1b bereits dann umgreifen, wenn er noch mit größeren Abschnitten seiner Schenkel und damit sicher zwischen den Nuten 5c und 5d gehalten wird.

Wie in Fig. 2 zu erkennen, sind am zweiten Verschließarm 4a zwei Ansätze jeweils mit Verschließwerkzeugen angeordnet. In entsprechender Weise trägt auch der erste Verschließarm 3a zwei Verschließwerkzeuge, so dass die Vorrichtung in bekannter Weise als Doppelclipautomat ausgebildet ist, der in einem Arbeitsgang das hintere Ende einer vorlaufenden Wurst und zugleich das vordere Ende einer nachlaufenden Wurst verschließen kann. Die Transporteinheit 5 weist entsprechend eine weitere Führungsbahn für das weitere Verschließwerkzeug auf.

## Patentansprüche

1. Vorrichtung zum Setzen vereinzelter U-förmiger Clips (2) um geraffte Verpackungsschläuche (1b) mit einem ersten Verschließwerkzeug (3) zum Ausüben einer Kraft auf die Clipschenkel, einem zweiten Verschließwerkzeug (4) zum Ausüben einer Kraft auf den Cliprücken, wobei die Verschließwerkzeuge (3, 4) eingerichtet sind, sich jeweils entlang einer Verschließbahn zu einer Verschlussposition aufeinander zu zu bewegen, einer relativ zu beiden Verschließwerkzeugen (3, 4) beweglichen Transporteinheit (5), die eingerichtet ist, einen vereinzelten Clip (2) von einer Zuführposition entlang einer Transportbahn zu der Verschlussposition zu transportieren, **dadurch gekennzeichnet, dass** die Transportbahn, entlang derer die Transporteinheit (5) den Clip (2) transportiert, nicht linear ist.

2. Vorrichtung nach Patentanspruch 1, **dadurch gekennzeichnet, dass** die Transportbahn bogenförmig, vorzugsweise kreisbogenförmig, ist.

3. Vorrichtung nach einem der vorstehenden Patentansprüche, **dadurch gekennzeichnet, dass** die Verschließbahn des zweiten Verschließwerkzeugs (4) nicht linear, vorzugsweise bogenförmig, weiter vorzugsweise kreisbogenförmig, ist.

4. Vorrichtung nach einem der vorstehenden Patentansprüche, **dadurch gekennzeichnet, dass** die Verschließbahnen des ersten und des zweiten Verschließwerkzeuges (4) auf demselben Kreisbogen liegen.

5. Vorrichtung nach einem der vorstehenden Patentansprüche, **dadurch gekennzeichnet, dass** die Verschließbahn des ersten Verschließwerkzeugs (3) nicht linear, vorzugsweise bogenförmig, weiter vorzugsweise kreisbogenförmig, ist.

6. Vorrichtung nach einem der vorstehenden Patentansprüche, **dadurch gekennzeichnet, dass** das erste Verschließwerkzeug (3) an einem ersten Verschließarm (3a), das zweite Verschließwerkzeug (4) an einem zweiten Verschließarm (4a) angeordnet und beide Verschließarme (3a, 4a) um dieselbe Schwenkachse (6) schwenkbar gelagert sind.

7. Vorrichtung nach Patentanspruch 6, **dadurch gekennzeichnet, dass** die Transporteinheit (5) an einem Transportarm (5f) angeordnet ist und dieser Transportarm (5f) um dieselbe Schwenkachse (6) wie die Verschließarme (3a, 4a) schwenkbar gelagert ist.

8. Vorrichtung nach einem der vorstehenden Patentansprüche, **dadurch gekennzeichnet, dass** die Transporteinheit (5) eine Ausnehmung (5e) zur Aufnahme des Verpackungsschlauchs (1b) aufweist.

9. Vorrichtung nach einem der vorstehenden Patentansprüche, **dadurch gekennzeichnet, dass** die Transporteinheit (5) eine Führungsbahn für das zweite Verschließwerkzeug (4) aufweist.

10. Vorrichtung nach Patentanspruch 9, **dadurch gekennzeichnet, dass** die Führungsbahn einen bogenförmigen, vorzugsweise kreisbogenförmigen, Verlauf hat.

11. Vorrichtung nach Patentanspruch 9 oder 10, **dadurch gekennzeichnet, dass** die Führungsbahn einen geöffneten Abschnitt (5a) zum Durchtritt eines Clips (2) umfasst.

12. Vorrichtung nach einem der Patentansprüche 9 bis 11, **dadurch gekennzeichnet, dass** die Führungsbahn einen umschlossenen Abschnitt (5b), der zum Halten des Clips (2) ausgebildet ist, aufweist.

13. Vorrichtung nach einem der Patentansprüche 9 bis 12, **dadurch gekennzeichnet, dass** die Führungsbahn die Ausnehmung (5e) zur Aufnahme des Verpackungsschlauchs (1b) kreuzt.

## Claims

1. Apparatus for applying individual U-shaped clips (2) around gathered packaging tubes (1b), having a first closing tool (3), for exerting a force on the limbs of the clip, having a second closing tool (4), for exerting a force on the spine of the clip, wherein the closing tools (3, 4) are designed to move towards one another, in each case along a closing path, into a closure position, and having a transporting unit (5), which can be moved relative to the two closing tools (3, 4) and is designed to transport an individual clip (2) from a feed position, along a transporting path, to the closure position, **characterized in that** the transporting path along which the transporting unit (5) transports the clip (2) is not linear.

2. The apparatus as claimed in Patent Claim 1, **characterized in that** the transporting path is in the form of an arc, preferably in the form of an arc of a circle.

3. Apparatus according to one of the preceding patent claims, **characterized in that** the closing path of the second closing tool (4) is not linear, and preferably is in the form of an arc, further preferably in the form of an arc of a circle.

4. Apparatus according to one of the preceding patent claims, **characterized in that** the closing paths of the first closing tool and of the second closing tool (4) lie on the same circle arc.

5. Apparatus according to one of the preceding patent claims, **characterized in that** the closing path of the first closing tool (3) is not linear, and preferably is in the form of an arc, further preferably in the form of an arc of a circle.

6. Apparatus according to one of the preceding patent claims, **characterized in that** the first closing tool (3) is arranged on a first closing arm (3a), the second closing tool (4) is arranged on a second closing arm (4a), and the two closing arms (3a, 4a) are mounted such that they can be pivoted about the same pivot axis (6).

7. Apparatus according to Patent Claim 6, **characterized in that** the transporting unit (5) is arranged on a transporting arm (5f), and this transporting arm (5f) is mounted such that it can be pivoted about the same pivot axis (6) as the closing arms (3a, 4a).

8. Apparatus according to one of the preceding patent claims, **characterized in that** the transporting unit (5) has a recess (5e) for accommodating the packaging tube (1b).

9. Apparatus according to one of the preceding patent claims, **characterized in that** the transporting unit (5) has a guide path for the second closing tool (4).

10. Apparatus according to Patent Claim 9, **characterized in that** the guide path runs in the form of an arc, preferably in the form of an arc of a circle.

11. Apparatus according to Patent Claim 9 or 10, **characterized in that** the guide path comprises an open portion (5a) for the through-passage of a clip (2).

12. Apparatus according to one of Patent Claims 9 to 11, **characterized in that** the guide path has an enclosed portion (5b), which is designed for retaining the clip (2).

13. Apparatus according to one of Patent Claims 9 to 12, **characterized in that** the guide path crosses over the recess (5e) for accommodating the packaging tube (1b).

## Revendications

1. Dispositif servant à placer des clips (2) en forme de U séparés autour de tubes d'emballage (1b) contractés, comportant un premier outil de fermeture (3) servant à exercer une force sur la branche du clip, un deuxième outil de fermeture (4) servant à exercer une force sur l'arrière du clip, les outils de fermeture (3, 4) étant installés de manière à se déplacer l'un sur l'autre respectivement le long d'une voie de fermeture en direction d'une position de fermeture, comportant une unité de transport (5) mobile par rapport aux deux outils de fermeture (3, 4), laquelle est installée de manière à transporter un clip séparé (2) depuis une position d'amenée le long d'une voie de transport en direction d'une position de fermeture, **caractérisé en ce que** la voie de transport le long de laquelle l'unité de transport (5) transporte le clip (2) n'est pas linéaire.

2. Dispositif selon la revendication 1, **caractérisé en ce que** la voie de transport présente une forme d'arc, de préférence une forme d'arc de cercle.

3. Dispositif selon l'une quelconque des revendications précédentes, **caractérisé en ce que** la voie de fermeture du deuxième outil de fermeture (4) n'est pas linéaire, mais présente de préférence la forme d'un arc, de manière plus préférée la forme d'un arc de cercle.

4. Dispositif selon l'une quelconque des revendications précédentes, **caractérisé en ce que** les voies de fermeture des premier et deuxième outils de fermeture (4) se trouvent sur le même arc de cercle.

5. Dispositif selon l'une quelconque des revendications précédentes, **caractérisé en ce que** la voie de fermeture du premier outil de fermeture (3) n'est pas linéaire, mais présente de préférence une forme d'arc, de manière plus préférée une forme d'arc de cercle.

6. Dispositif selon l'une quelconque des revendications précédentes, **caractérisé en ce que** le premier outil de fermeture (3) est disposé au niveau d'un premier bras de fermeture (3a) et le deuxième outil de fermeture (4) au niveau d'un deuxième bras de fermeture (4a), et **en ce que** les deux bras de fermeture (3a, 4a) sont montés pivotants autour du même axe de pivotement (6).

7. Dispositif selon la revendication 6, **caractérisé en ce que** l'unité de transport (5) est disposée sur un bras de transport (5f), et **en ce que** ledit bras de transport (5f) est monté pivotant autour du même axe de pivotement (6) que les bras de fermeture (3a, 4a).

8. Dispositif selon l'une quelconque des revendications précédentes, **caractérisé en ce que** l'unité de transport (5) présente un évidement (5e) de réception du tube d'emballage (1b).

9. Dispositif selon l'une quelconque des revendications précédentes, **caractérisé en ce que** l'unité de transport (5) présente une voie de guidage pour le deuxième outil de fermeture (4).

10. Dispositif selon la revendication 9, **caractérisé en ce que** la voie de guidage présente un tracé en forme d'arc, de préférence en forme d'arc de cercle.

11. Dispositif selon la revendication 9 ou 10, **caractérisé en ce que** la voie de guidage comporte une section ouverte (5a) pour la pénétration d'un clip (2).

12. Dispositif selon l'une quelconque des revendications 9 à 11, **caractérisé en ce que** la voie de guidage présente une section fermée (5b), qui est réalisée pour maintenir le clip (2).

13. Dispositif selon l'une quelconque des revendications 9 à 12, **caractérisé en ce que** la voie de guidage croise l'évidement (5e) de réception du tube d'emballage (1b).
